# EUROPEAN PATENT SPECIFICATION

(11) **EP 1 440 867 B1**
(45) Date of publication and mention of the grant of the patent: **09.08.2006**
(21) Application number: 03001640.6
(22) Date of filing: 24.01.2003
(51) Int. Cl.: B62D 21/15

(54) **Structural design component for automotive vehicles**
Entwurf-Strukturbauteil für Kraftfahrzeug
Element de structure de conception pour véhicule automobile

(43) Date of publication of application: 28.07.2004
(73) Proprietor: Ford Global Technologies, Inc., Dearborn, MI 48126-2490 (US)
(72) Inventor: Janevik, Peter, 415 14 Gothenburg (SE); Hörling, Petter, 414 66 Gothenburg (SE)
(74) Representative: Egeröd, Lisbeth

(56) References cited:
- WO-A-01/19666
- DE-A- 19 731 284
- US-A- 3 827 712
- PATENT ABSTRACTS OF JAPAN vol. 1995, no. 04, 31 May 1995 (1995-05-31) -& JP 07 010033 A (MITSUBISHI MOTORS CORP), 13 January 1995 (1995-01-13)
- PATENT ABSTRACTS OF JAPAN vol. 2000, no. 03, 30 March 2000 (2000-03-30) -& JP 11 342862 A (NISSAN MOTOR CO LTD), 14 December 1999 (1999-12-14)
- PATENT ABSTRACTS OF JAPAN vol. 1995, no. 09, 31 October 1995 (1995-10-31) -& JP 07 149255 A (TOYOTA MOTOR CORP), 13 June 1995 (1995-06-13)

## Description

### Technical field

The present patent application relates to a structural design component and in particular a structural design component for automotive vehicles having improved crash performance in accordance with the preamble of claim 1.

### Background of the invention

As design constraints of car structures and structural members are continuously made tougher, it is becoming increasingly difficult to design different structures, such as front and rear side rails and shotgun members, for optimum crash performance. The constraints often make it impossible to design for a buckling collapse of the structures, which is usually the optimal approach from a weight optimization perspective. Members having a pre-bent shape, for example, does normally not support a buckling deformation, As a result, bending collapse of the member becomes the only remaining option. However, this comes at a high price, as the energy absorption in a bending mode is rather ineffective per mass unit of structure as compared to buckling collapse. Several proposals have been made to increase the energy absorption in a bending mode.

One such device which is arranged to increase the energy absorption in a bending mode is previously known through US 3 827 712, in which is described a structural frame capable of absorbing impact energy, which comprises a structural frame member of metallic material defining closed rectangular cross-section. Portion of each of the structural frame members is bent in the direction perpendicular to the longitudinal direction of the frame and energy absorption materials of metallic material with bowl-shaped projections are attached to those two opposing inner surfaces of the frame members which oppose in the direction of bending so that the bowl-shaped projections abut against each other. Upon collision, due to the resistance to plastic deformation of the bowl-shaped projections the shape of the cross-section of the structural frame may be maintained in its initial state and no abrupt decrease of bending moment takes place.

A disadvantage with the arrangement known from the prior art mentioned above is that it will increase the longitudinal bending resistance of the pre-bent structural frame member, why special consideration and reinforcement of the attachment points between the pre-bent structural frame member and the adjacent members will be required. This will usually result in an undesired overall weight increase.

Further is known from JP 710033 A, a side member of a vehicle where a hollow resin container of round cross-section containing pressurized air is arranged between two bulkheads in a cube type closed section of the member. If the deformation force exceeds a certain limit the container is destroyed and the side member is buckled in bellows like deformation mode to absorb collision energy. In an alternative embodiments it is stated that the container may have one or more walls in the interior of the container, raising the rigidity of the container. Furthermore is stated that the container may be made from Aluminum.

Yet further is known from EP 1 331 160 A, which constitutes prior art according to Art. 54(3) and (4) EPC, a reinforcing structure, which is provided to attain sufficient reinforcing effect for a body frame without increasing a weight of a vehicle. The reinforcing structure includes a member whose peripheral wall has an outer panel and a reinforcement to provide a double wall structure, and an adjusting mechanism for making a buckling-mode waveform of the outer panel in a substantially-reversed phase to a buckling-mode waveform of the reinforcement. The adjusting mechanism includes a plurality of beads formed on a top wall of the reinforcement. Owing to the deformation of the outer panel in a substantially reversed phase to the deformation of the reinforcement the deformation in reversed phase (antiphase) enhances the contact force (resistance force) in comparison with a structure where the members are deformed in synchronous phase. Both of the inner and outer wall members come into intensive contact with each other at respective peaks of the waveform which makes it is possible to increase energy consumption during deformation.

The disadvantage stated above with respect to US 3 827 712 is true also for the solutions in accordance with JP 7 10033 A as well as EP 1 331 160 A, which both will contribute substantially to the longitudinal stiffness.

### Summary of the invention

One object of the invention is to provide an improved structural design component and in particular an improved structural design component for automotive vehicles providing for increased energy absorption during bending collapse of the member addressing the problems described in relation to the prior art arrangement.

This object is achieved in accordance with the characterizing portion of claim 1.

Thanks to the provision of means for inducing local buckling at multiple locations along a delimiting wall of a structural design component being subject to negative (pushing) stresses during bending, which means does not contribute to the longitudinal stiffness of the structural design component in any significant amount, the energy absorption during bending collapse of the structural design component can be increased while at the same time the peak force level can be essentially maintained, such that no special consideration and reinforcement of the attachment points between the structural design component and the adjacent members will be required. Thus, energy absorption will be increased without any significant weight increase.

Preferred embodiments are listed in the dependent claims.

### Description of drawings

In the following, the invention will be described in greater detail with reference to attached drawings, in which:

Fig. 1 is a simplified side view of a structural design component in the shape of a elongated hollow sheet metal beam not incorporating the invention,

Fig. 2 is a schematic illustration of the typical force characteristic over displacement for the case illustrated in figure 1,

Fig. 3 is a simplified side view of a structural design component in the shape of a elongated hollow sheet metal beam incorporating the invention,

Fig. 4 is a schematic illustration of the typical force characteristic over displacement for the case illustrated in figure 3,

Fig. 5 is a structural design component comprising a deformation control element in accordance with a preferred embodiment of the present invention.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### Description of embodiments

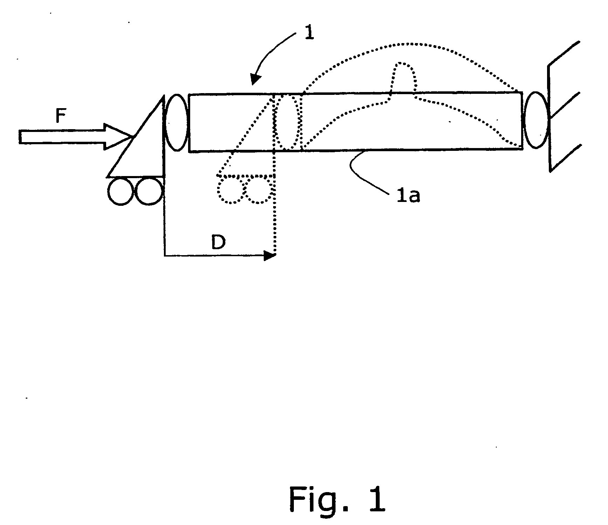

A simplified side view of a structural design component in the shape of a elongated hollow sheet metal beam 1 not incorporating the invention is shown in figure 1. Full lines illustrates the beam 1 prior to being subject to a bending collapse mode and the dotted lines illustrates the beam 1 being subject to a bending collapse mode.

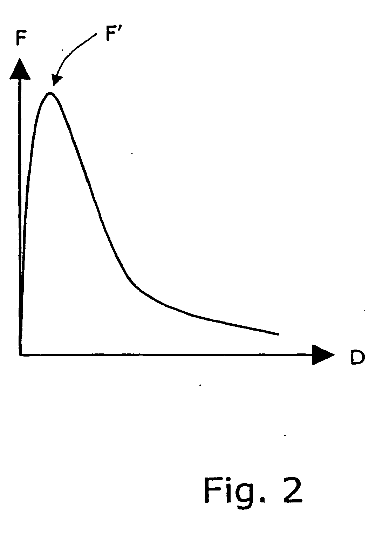

Fig. 2 shows the typical force F characteristic over displacement D for the case illustrated in figure 1. During the initial force buildup, the force will increase rapidly and linearly as the displacement progresses. The peak force F' is basically a factor of the geometry through the section bending stiffness, the length of the beam 1 and the modulus of the material.

Once the peak F' force is reached, a global bending buckling mode Is developed, in this case corresponding to the second Euler case. The force F then drops rapidly due to localized buckling developing on the side of the beam 1 having negative (pushing) stresses.

The local buckling coupled with the advent of bending moments in the beam 1 results in a loss of section in the beam 1 combined with an increase in stress levels due to the bending moments. The net effect is a very rapid loss of force carrying ability when the displacement D is increased.

The force F eventually drops down to a residual level, this level being mainly a factor of the tensile stress of the material, the length and width of the beam 1 combined with the material thickness.

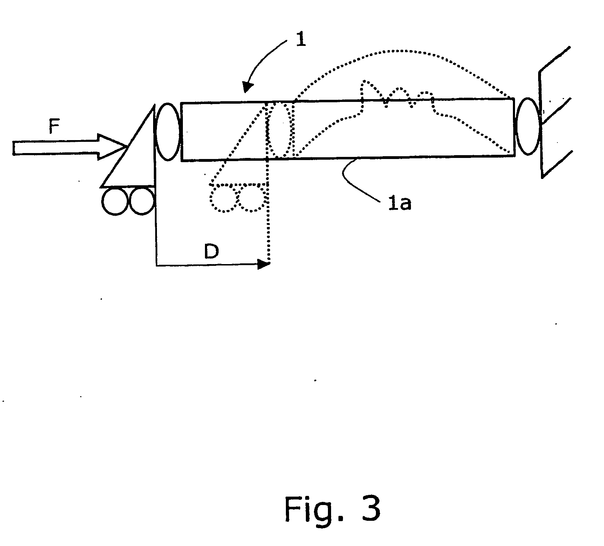

Figure 3 illustrates a structural design component in the shape of a elongated hollow sheet metal beam 1 according to figure 1 incorporating a deformation control element (not shown) according to the invention. Full lines illustrates the beam 1 prior to being subject to a bending collapse mode and the dotted lines illustrates the beam 1 being subject to a bending collapse mode.

As illustrated in figure 3, the arrangement according to the invention results in the beam 1 buckling in multiple places in stead of one. The result is that there is an increased energy absorption during collapse.

The deformation in accordance with figure 3 is achieved through providing inside the beam 1 a deformation control element having means for keeping the cross-section thereof up at a certain level, although local buckling has started. Hereby the force level is kept up after buckling has been initiated. The deformation control element further has means for causing the beam 1 to develop local buckling in multiple places, whereby the energy absorption of the design is optimized.

By designing the deformation control element in such a way that it does not contribute to the beam 1 longitudinal stiffness in any significant amount, a preserved peak force level can be achieved. Hereby the need for special considerations and reinforcements of the attachment points between the beam and any surrounding structures can be eliminated.

The deformation control element can also be designed to be somewhat deformed during the final stages of the bending collapse, which will also contribute somewhat to the energy absorption of the design.

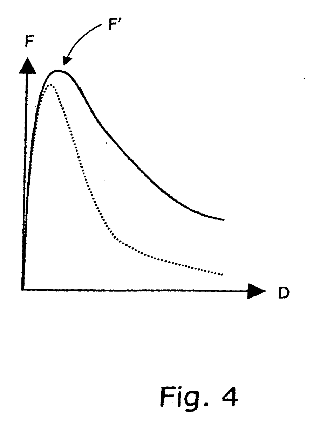

In figure 4 the typical force characteristic over displacement for the case illustrated in figure 3 is illustrated.

During the initial force buildup, the force will increase rapidly and linearly as the displacement progresses essentially corresponding to figure 2. As with the beam of figure 1, the peak force F' is basically a factor of the geometry through the section bending stiffness, the length of the beam 1 and the modulus of the material.

Once the peak force F' is reached, multiple bending buckling modes are developed. The force F then drops less rapidly as compared to figure 2, (also shown with dotted lines in figure 4), due to distributed buckling developing on the side of the beam 1 having negative (pushing) stresses.

The distributed buckling coupled with the presence of section maintaining means in the beam 1 results in a delayed loss of section in the beam 1. This results in a slower loss of force carrying ability when the displacement D is increased.

The force F eventually drops down to a residual level, this level being higher than that of the beam 1 in accordance with figure 1.

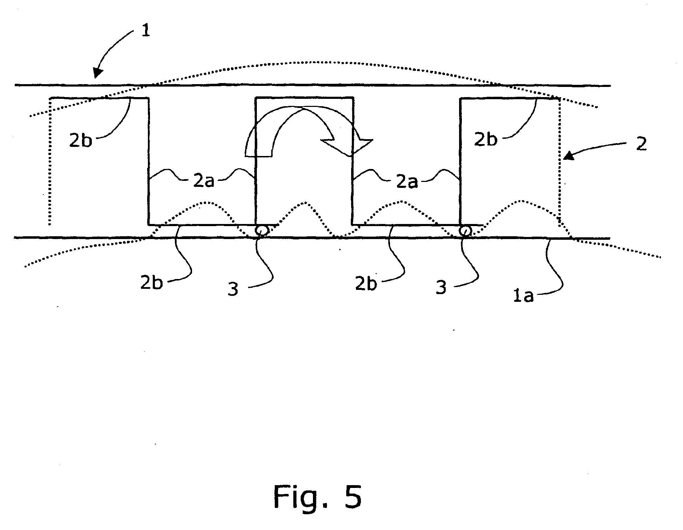

In figure 5 is illustrated a possible design of a structural design component 1 comprising a deformation control element 2 in accordance with a preferred embodiment of the present invention. The deformation control element 2 is illustrated in a cut through side view of the hollow sheet metal beam 1 of figure 3.

The beam 1 has a portion bendable when a collision load is applied in a longitudinal direction thereof. An initial closed cross-section of the beam 1 is essentially orthogonal to the longitudinal direction of the beam 1.

Inside the hollow sheet metal beam 1 is arranged the deformation control element 2, which provide means 2a arranged to, during the initial stages of bending, essentially maintain the initial cross-section of said bendable portion. These means 2a are here shown as part of the longitudinally extending deformation control element 2, and realized as multiple longitudinally spaced apart sheet members 2a arranged within said beam 1 essentially orthogonal to the longitudinal direction thereof and essentially filling out the initial closed cross-section thereof. These sheet members 2a are designed to keep the cross-section of the beam 1 up during the initial buckling.

The sheet members 2a are spaced apart by essentially longitudinally extending spacing sections 2b of low bending stiffness, also part of the deformation control element 2. Each of said spacing sections 2b interconnect two of said sheet members 2a along an inner delimiting wall of said beam 1. The spacing sections 2b alternatingly are arranged along opposing inner delimiting walls of said beam 1, in order to minimize any contribution to the bending stiffness thereof.

The deformation control element 2 further provide means 3 arranged to, during the initial stages of bending, induce local buckling at multiple distributed locations along a delimiting wall of said beam arranged to ,upon bending, being subject to negative (pushing) stresses. This local buckling at multiple distributed locations during bending collapse is illustrated with dotted lines in figure 5.

The means 3 for inducing local buckling comprise longitudinally spaced apart interconnections 3 between said longitudinally extending deformation control element 2 and said delimiting wall of said beam 1, which wall is arranged to ,upon bending, provide an inner radius of curvature of said portion being subject to negative pushing stresses. The deformation control element 2 is connected to the beam 1 at locations where the bending stiffness of the deformation control element 2 is low, here illustrated as portions of the spacing sections 2b projecting slightly past the sheet members 2a, thus the stiffness contribution to the beam 1 is kept to a minimum. These interconnections 3 can also be arranged between at least two of the sheet members 2a and the delimiting wall of the beam 1. Alternatively these interconnections 3 can be arranged between at least two of said spacing sections 2b and said delimiting wall of the beam 1.

The interconnections 3 further are arranged only at the side of the deformation control element 2 facing the side of the beam 1 intended to provide the inner radius of curvature during bending collapse, i.e. the side of the beam being subject to negative (pushing) stresses during bending. These interconnections 3 can be achieved in any suitable way, e.g. through welding, gluing or any other suitable method of interconnection known to the person skilled in the art. In the case of both the beam 1 and the deformation control element 2 being steel sheet metal structures, welding is usually the preferred method of interconnection.

The deformation control element 2 must be continuous throughout the distance where the bending radius is designed to appear to have the desired effect of causing multiple distributed bending buckling modes during bending.

The invention is not limited to the above-described embodiments, but may be varied within the scope of the following claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the scope of the claims appended hereto.

## Claims

1. A hollow elongated structural design component (1) for a vehicle body having a portion bendable when a collision load is applied in a longitudinal direction of the component (1), said portion having an initial closed cross-section essentially orthogonal to said longitudinal direction, said component (1) comprising means (2a) arranged to, during the initial stages of bending, essentially maintain the initial cross-section of said portion, where said component (1) further comprises means (3) arranged to, during the initial stages of bending, induce local buckling at multiple distributed locations along a delimiting wall (1a) of said structural design component (1) arranged to, upon bending, being subject to negative pushing stresses, and said means for maintaining the initial cross-section comprise at least two longitudinally spaced apart sheet members (2a) arranged within said structural design component (1) essentially orthogonal to said longitudinal direction and essentially filling out the initial closed cross-section, **characterized in, that** said means (2a) for maintaining the initial cross-section and said means (3) for inducing local buckling are part of a longitudinally extending deformation control element (2) arranged within said component, which deformation control element (2) is continuous throughout said portion.

2. A structural design component (1) according to claim 1,
**characterized in that** said sheet members (2a) are spaced apart by essentially longitudinally extending spacing sections (2b) of low bending stiffness.

3. A structural design component (1) according claim 2,
**characterized in that** each of said spacing sections (2b) are arranged along an inner delimiting wall of said structural design component (1) and interconnect two of said sheet members (2a).

4. A structural design component (1) according to claim 3,
**characterized in that** said spacing sections (2b) alternatingly are arranged along opposing inner delimiting walls of said structural design component (1).

5. A structural design component (1) according to claim 1,
**characterized in that** said means for inducing local buckling comprise longitudinally spaced apart interconnections (3) between said deformation control element (2) and said delimiting wall (1a) of said structural design component (1) arranged to ,upon bending, being subject to negative pushing stresses.

6. A structural design component (1) according to any of claims 1 to 4,
**characterized in that** said means for inducing local buckling comprise longitudinally spaced apart interconnections (3) between at least two of said sheet members (2a) and said delimiting wall (1a) of said structural design component (1) arranged to ,upon bending, being subject to negative pushing stresses.

7. A structural design component (1) according to any of claims 2 to 4,
**characterized in that** said means for inducing local buckling comprise longitudinally spaced apart interconnections (3) between at least two of said spacing sections (2b) and said delimiting wall (1a) of said structural design component (1) arranged to ,upon bending, being subject to negative pushing stresses.

8. A structural design component (1) according to any one of the preceding claims,
**characterized in that** said structural design component (1) is a sheet metal component and said means (2a) for maintaining the initial cross-section and said means (3) for inducing local buckling comprise sheet metal members.

9. A structural frame of a vehicle body,
**characterized in that** it comprises a structural design component (1) according to any one of the preceding claims.

10. A vehicle,
**characterized in that** it comprises a structural design component (1) according to any one of claims 1 to 10.

## Patentansprüche

1. Hohles längliches Strukturbauteil (1) für eine Fahrzeugkarosserie mit einem Abschnitt, der biegbar ist, wenn eine Kollisionslast in einer Längsrichtung des Bauteils (1) angelegt wird, wobei der Abschnitt einen geschlossenen Anfangsquerschnitt im Wesentlichen orthogonal zur Längsrichtung aufweist, das Bauteil (1) Mittel (2a) aufweist, die so ausgestaltet sind, dass sie während der Anfangsphasen des Biegens den Anfangsquerschnitt des Abschnitts im Wesentlichen aufrechterhalten, wobei das Bauteil (1) ferner Mittel (3) aufweist, die so ausgestaltet sind, dass sie während der Anfangsphasen des Biegens örtliches Einknicken an mehreren verteilten Stellen entlang einer Begrenzungswand (1a) des Strukturbauteils (1) hervorrufen, die so ausgestaltet ist, dass sie bei Biegung negativen Beanspruchungen unterliegt, und die Mittel (2a) zum Aufrechterhalten des Anfangsquerschnitts wenigstens zwei der Länge nach beabstandete Blechelemente (2a) aufweisen, die innerhalb des Strukturbauteils (1) im Wesentlichen orthogonal zur Längsrichtung angeordnet sind und den geschlossenen Anfangsquerschnitt im Wesentlichen ausfüllen, **dadurch gekennzeichnet, dass** die Mittel (2a) zum Aufrechterhalten des Anfangsquerschnitts und die Mittel (3) zum Hervorrufen des örtlichen Einknickens Teil eines sich der Länge nach erstreckenden Verformungssteuerungselements (2) sind, das innerhalb des Bauteils angeordnet ist, wobei das Verformungssteuerungselement (2) durchgehend in dem ganzen Abschnitt verläuft.

2. Strukturbauteil (1) nach Anspruch 1, **dadurch gekennzeichnet, dass** die Blechelemente (2a) durch sich im Wesentlichen der Länge nach erstreckende Abstandsstücke (2b) geringer Biegesteifigkeit beabstandet sind.

3. Strukturbauteil (1) nach Anspruch 2, **dadurch gekennzeichnet, dass** jedes der Abstandsstücke (2b) entlang einer inneren Begrenzungswand des Strukturbauteils (1) angeordnet ist und zwei der Blechelemente (2a) miteinander verbindet.

4. Strukturbauteil (1) nach Anspruch 3, **dadurch gekennzeichnet, dass** die Abstandsstücke (2b) entlang gegenüberliegenden inneren Begrenzungswänden des Strukturbauteils (1) abwechselnd angeordnet sind.

5. Strukturbauteil (1) nach Anspruch 1, **dadurch gekennzeichnet, dass** die Mittel zum Hervorrufen des örtlichen Einknickens der Länge nach beabstandete Verbindungen (3) zwischen dem Verformungssteuerungselement (2) und der Begrenzungswand (1a) des Strukturbauteils (1) aufweisen, die so ausgelegt ist, dass sie bei Biegung negativen Stoßbeanspruchungen unterliegt.

6. Strukturbauteil (1) nach einem der Ansprüche 1 bis 4, **dadurch gekennzeichnet, dass** die Mittel zum Hervorrufen des örtlichen Einknickens der Länge nach beabstandete Verbindungen (3) zwischen mindestens zweien der Blechelemente (2a) und der Begrenzungswand (1a) des Strukturbauteils (1) aufweisen, die so ausgelegt ist, dass sie bei Biegung negativen Stoßbeanspruchungen unterliegt.

7. Strukturbauteil (1) nach einem der Ansprüche 2 bis 4, **dadurch gekennzeichnet, dass** die Mittel zum Hervorrufen des örtlichen Einknickens der Länge nach beabstandete Verbindungen (3) zwischen mindestens zweien der Abstandsstücke (2b) und der Begrenzungswand (1a) des Strukturbauteils (1) aufweisen, die so ausgestaltet ist, dass sie bei Biegung negativen Stoßbeanspruchungen unterliegt.

8. Strukturbauteil (1) nach einem der vorhergehenden Ansprüche, **dadurch gekennzeichnet, dass** das Strukturbauteil (1) ein metallisches Blechbauteil ist und die Mittel (2a) zum Aufrechterhalten des Anfangsquerschnitts und die Mittel (3) zum Hervorrufen des örtlichen Einknickens metallische Blechbauteile aufweisen.

9. Rahmenkonstruktion einer Fahrzeugkarosserie, **dadurch gekennzeichnet, dass** sie ein Strukturbauteil (1) nach einem der vorhergehenden Ansprüche aufweist.

10. Fahrzeug, **dadurch gekennzeichnet, dass** es ein Strukturbauteil (1) nach einem der Ansprüche 1 bis 10 aufweist.

## Revendications

1. Composant de conception de structure allongé creux (1) pour une carrosserie de véhicule ayant une partie pouvant fléchir lorsqu'une charge de collision est appliquée dans une direction longitudinale du composant (1), ladite partie ayant une section transversale fermée initiale sensiblement orthogonale à ladite direction longitudinale, ledit composant (1) comportant des moyens (2a) agencés pour, pendant les étapes initiales de flexion, maintenir sensiblement la section transversale initiale de ladite partie, où ledit composant (1) comporte également des moyens (3) agencés pour, pendant les étapes initiales de flexion, induire un flambage local en de multiples endroits répartis le long d'une paroi de délimitation (1a) dudit composant de conception de structure (1) agencée pour, lors d'une flexion, être soumise à des contraintes négatives, et lesdits moyens pour maintenir la section transversale initiale comportent au moins deux éléments de tôle longitudinalement espacés l'un de l'autre (2a) agencés dans ledit composant de conception de structure (1) sensiblement orthogonaux à ladite direction longitudinale et comblant sensiblement la section transversale initiale,
**caractérisé en ce que** lesdits moyens (2a) pour maintenir la section transversale initiale et lesdits moyens (3) pour induire un flambage local sont une partie d'un élément de commande de déformation s'étendant longitudinalement (2) agencé dans ledit composant, lequel élément de commande de déformation (2) est continu tout au long de ladite partie.

2. Composant de conception de structure (1) selon la revendication 1,
**caractérisé en ce que** lesdits éléments de tôle (2a) sont espacés les uns des autres par des tronçons d'espacement s'étendant de manière sensiblement longitudinale (2b) ayant une faible rigidité à la flexion.

3. Composant de conception de structure (1) selon la revendication 2,
**caractérisé en ce que** chacun desdits tronçons d'espacement (2b) est agencé le long d'une paroi de délimitation intérieure dudit composant de conception de structure (1) et relie mutuellement deux desdits éléments de tôle (2a).

4. Composant de conception de structure (1) selon la revendication 3,
**caractérisé en ce que** lesdits tronçons d'espacement (2b) sont agencés en alternance le long de parois de délimitation intérieures opposées dudit composant de conception de structure (1).

5. Composant de conception de structure (1) selon la revendication 1,
**caractérisé en ce que** lesdits moyens pour induire un flambage local comportent des interconnexions longitudinalement espacées les unes des autres (3) entre ledit élément de commande de déformation (2) et ladite paroi de délimitation (1a) dudit composant de conception de structure (1) agencées pour, lors d'une flexion, être soumises à des contraintes de poussée négatives.

6. Composant de conception de structure (1) selon l'une quelconque des revendications 1 à 4,
**caractérisé en ce que** lesdits moyens pour induire un flambage local comportent des interconnexions longitudinalement espacées les unes des autres (3) entre au moins deux desdits éléments de tôle (2a) et ladite paroi de délimitation (1a) dudit composant de conception de structure (1) agencées pour, lors d'une flexion, être soumises à des contraintes de poussée négatives.

7. Composant de conception de structure (1) selon l'une quelconque des revendications 2 à 4,
**caractérisé en ce que** lesdits moyens pour induire un flambage local comportent des interconnexions longitudinalement espacées les unes des autres (3) entre au moins deux desdits tronçons d'espacement (2b) et ladite paroi de délimitation (1a) dudit composant de conception de structure (1) agencées pour, lors d'une flexion, être soumises à des contraintes de poussée négatives.

8. Composant de conception de structure (1) selon l'une quelconque des revendications précédentes,
**caractérisé en ce que** ledit composant de conception de structure (1) est un composant en tôle métallique et lesdits moyens (2a) pour maintenir la section transversale initiale et lesdits moyens (3) pour induire un flambage local comportent des éléments en tôle métallique.

9. Châssis de structure d'une carrosserie de véhicule,
**caractérisé en ce qu'**il comporte un composant de conception de structure (1) selon l'une quelconque des revendications précédentes.

10. Véhicule,
**caractérisé en ce qu'**il comporte un composant de conception de structure (1) selon l'une quelconque des revendications 1 à 10.
